# EUROPÄISCHE PATENTSCHRIFT

(11) **EP 1 988 316 B1**
(45) Veröffentlichungstag und Bekanntmachung des Hinweises auf die Patenterteilung: **24.10.2012**
(21) Anmeldenummer: 08007130.1
(22) Anmeldetag: 10.04.2008
(51) Int. Cl.: F16K 31/00

(54) **Ventil**
Valve
Soupape

(30) Priorität: 30.04.2007 DE 102007020361
(43) Veröffentlichungstag der Anmeldung: 05.11.2008
(73) Patentinhaber: MARCO SYSTEMANALYSE UND ENTWICKLUNG GmbH, D-85221 Dachau (DE)
(72) Erfinder: Reuter, Martin, 85221 Dachau (DE)
(74) Vertreter: Manitz, Finsterwald & Partner GbR

(56) Entgegenhaltungen:
- EP-A1- 1 411 285
- EP-A1- 1 467 133

## Beschreibung

Die vorliegende Erfindung betrifft ein Ventil gemäß dem Oberbegriff des Anspruchs 1 und insbesondere solch ein Ventil zur Dosierung pastöser Medien im Klein- und Kleinstmengenbereich im Bereich der automatisierten Fertigung und Produktionstechnik.

Ein gattungsgemäßes Ventil ist beispielsweise aus der EP 1 467 133 A1 bekannt geworden.

Die zunehmende Miniaturisierung industrieller Produkte ist eine Tendenz, die vor allem im Bereich der Unterhaltungs- und Kommunikationselektronik immer deutlicher wird. Fertigungstechnologisch führt die Herstellung immer kleiner werdender Komponenten besonders bei hohen Produktionsfrequenzen zu völlig neuen Herausforderungen. Dies gilt vor allem für die Dosierung von pastösen Medien während des Fertigungsprozesses. Jedoch nicht nur in der Elektronik sondern auch im Bereich des Maschinen- und Gerätebaus, der Feinwerktechnik, der Medizintechnik, der Chemie, der Lebensmitteltechnik und der Verpackungstechnik, besteht ein Bedarf danach, pastöse Medien wie beispielsweise Klebstoffe, Fette, Öle, Flussmittel oder Lacke, hochgenau im Klein- und Kleinstmengenbereich zu dosieren.

Zusätzlich zu der zunehmenden Miniaturisierung fordern immer kürzer werdende Taktzeiten im Bereich der Fertigungstechnik eine höchst zuverlässige Prozesssicherheit und Genauigkeit der Dosierung.

Der vorliegenden Erfindung liegt die Aufgabe zugrunde, ein Ventil anzugeben, welches höchste Ansprüche an die Genauigkeit der Dosierung erfüllt, und welches sich mit hohen Dosierfrequenzen präzise betreiben lässt.

Diese Aufgabe wird mit einem Ventil gelöst, welches die Merkmale des Anspruchs 1 aufweist. Das erfindungsgemäße Ventil weist ein Ventilelement auf, welches eine Dosieröffnung umfasst, durch welche das zu dosierende Medium an eine Dosiernadel zugeführt werden kann. Um zu Zwecken der Dosierung einen kontinuierlichen Zustrom des zu dosierenden Mediums zu der Dosiernadel durch die Dosieröffnung zu verhindern, weist das Ventil ferner einen translatorisch bewegbaren Ventilschieber auf, mit welchem sich die Dosieröffnung des Ventilelements bedarfsweise öffnen und schließen lässt. Der Ventilschieber und das Ventilelement stehen dabei in reibschlüssigem Kontakt zueinander, weshalb das Ventilelement und/oder der Ventilschieber aus einem Keramikmaterial gefertigt sein können, um die Abrieb- und Verschleißfestigkeit dieser Bauteile zu erhöhen.

Um die gewünschte alternierende Öffnungs- und Schließbewegung des Ventilschiebers zu erzeugen, weist das Ventil ferner einen Betätigungsaktor auf, welcher vorzugsweise einen Piezoantrieb umfasst. Da sich mit einem derartigen Piezoantrieb unmittelbar jedoch nur verhältnismäßig kleine Hübe erzeugen lassen, die nicht ausreichend sind, um den Ventilschieber zu der gewünschten translatorischen Hubbewegung mit einem erforderlichen Hub von etwa 1 mm zu veranlassen, ist der Betätigungsaktor zur Ausführung einer Kippbewegung eingerichtet, wobei mit dem Betätigungsaktor ein Hebelarm gekoppelt ist, der die Kippbewegung des Betätigungsaktors zum Öffnen und Schließen der Dosieröffnung des Ventilelements in die gewünschte translatorische Hubbewegung des Ventilschiebers übersetzt und somit verstärkt.

Mit anderen Worten wird durch den Hebelarm die Kippbewegung des Betätigungsaktors in eine Pendelbewegung übersetzt, wobei mit zunehmender Hebelarmlänge dessen maximale Auslenkung zunimmt, so dass durch die pendelnde Auslenkbewegung des freien Endes des Hebelarms der Ventilschieber zu der gewünschten translatorischen Hubbewegung zum Öffnen und Schließen der Dosieröffnung des Ventilelements veranlasst werden kann.

Die Übersetzung der Kippbewegung des Betätigungsaktors durch einen damit gekoppelten Hebelarm erweist sich ferner dahingehend als vorteilhaft, als dadurch der rotatorische Charakter der Kippbewegung insbesondere bei sehr großer Hebelarmlänge in eine annähernd translatorische Hubbewegung des Ventilschiebers transformieren lässt. Dieser wird somit nur sehr geringen rotatorischen Bewegungskomponenten unterworfen.

Um die Kippbewegung des Betätigungsaktors möglichst präzise und vorhersagbar auf den Ventilschieber übertragen zu können, weist der Hebelarm einen in sich geschlossenen Hohlquerschnitt auf. Durch diese Maßnahme lässt sich mit einfachen Mitteln ein großes Flächenträgheitsmoment (zweiter Ordnung) des Hebelarms bei nur geringem Eigengewicht desselben erzielen, so dass dieser bei geringem Eigengewicht eine verhältnismäßig hohe Biegesteifigkeit aufweist. Die Minimierung des Eigengewichts des Hebelarms ist dabei insbesondere deshalb von Interesse, um die Massenträgheitskräfte des Hebelarms klein zu halten, da dieser ansonsten aufgrund der sehr hohen Anregungsfrequenzen durch den Betätigungsaktor, welche bis zu 500 Hz und mehr betragen können, der Anregungsfrequenz nicht mehr folgen könnte. Die Maximierung des Flächenträgheitsmoments (zweiter Ordnung) ist dahingegen von Interesse, damit sich der Hebelarm über seine Länge hinweg nicht verbiegt, um somit die Auslenkung desselben an seinem freien Ende exakt voraussagen bzw. berechnen zu können.

Vorteilhafte Ausführungsformen der Erfindung sind in der Beschreibung, den Zeichnungen sowie in den Unteransprüchen wiedergegeben.

Da der Hebelarm an seinem freien Ende nur geringen Biegebeanspruchungen ausgesetzt ist, kann sich der Querschnitt des Hebelarms in Richtung des Ventilschiebers kontinuierlich verjüngen, da aufgrund der geringeren Biegebeanspruchung am freien Ende dort nur geringere Flächenträgheitsmomente erforderlich sind. Darüber hinaus erweist sich die genannte Querschnittsverjüngung auch in Bezug auf die gewünschte Minimierung des Massenträgheitsmoments als vorteilhaft, wodurch sich das Ansprechverhalten des Hebelarms auf die Anregung durch den Betätigungsaktor weiter verbessern lässt.

Um die Steifigkeitseigenschaften sowie das Trägheitsverhalten des Hebelarms weiter zu verbessern, kann dieser aus einem Edelstahlblech gefertigt sein, welches insbesondere eine Dicke t von etwa 0,1 mm aufweisen kann. Die Herstellung des Hebelarms aus Edelstahl erweist sich aber insbesondere aufgrund des verhältnismäßig hohen E-Moduls von Edelstahl als vorteilhaft, was sich unmittelbar positiv auf das Verformungsverhalten des Hebelarms auswirkt.

Um eine möglichst einfache Herstellung des Hebelarms zu gewährleisten, kann dieser aus mehreren gekanteten Blechformteilen gefügt, insbesondere zusammengeschweißt sein. Auf diese Art und Weise lässt sich mit einfachen Mitteln ein geschlossener Hohlquerschnitt erzeugen, indem beispielsweise zwei (mehrfach) in Längsrichtung gekantete Blechteile entlang ihren freien Rändern miteinander verschweißt werden. Der Vollständigkeit halber sei an dieser Stelle erwähnt, dass im Rahmen der vorliegenden Erfindung auch Blechformteile mit runder Querschnittsgeometrie unter den Begriff "gekantetes Blechformteil" fallen, da eine Rundung nichts anderes als eine Abkantung mit verhältnismäßig großem Biegeradius darstellt.

Gemäß einer Ausführungsform kann der Betätigungsaktor ein Joch in Form eines Kippsockels umfassen, an dem der Hebelarm als Kragarm biegesteif angeschlossen, insbesondere angeschweißt ist, welcher an seinem frei auskragenden Ende mit dem Ventilschieber gekoppelt ist. Mit Hilfe des Kippsockels wird dabei die Kippbewegung des Piezoantriebs in eine Kippbewegung des Hebelarms übertragen und in die gewünschte translatorische Hubbewegung übersetzt wird.

Da die durch den Hebelarm übersetzte Kippbewegung des Betätigungsaktors bzw. dessen Kippsockels auch bei verhältnismäßig großer Hebelarmlänge und geringer Auslenkung noch geringfügige rotatorische Bewegungskomponenten umfasst, kann der Hebelarm an seinem frei auskragenden Ende ein Koppelelement zur Aufnahme des Ventilschiebers umfassen. Dieses Koppelelement kann in Richtung der Längserstreckung des Hebelarms eine verhältnismäßig geringe Biegesteifigkeit aufweisen, um somit senkrecht zu der translatorischen Hubbewegung des Ventilschiebers ausgerichtete Bewegungskomponenten des Hebelarms kompensieren zu können, so dass diese nicht auf den Ventilschieber übertragen werden, wodurch sich unerwünschte Zwängungen weiter reduzieren lassen.

Gemäß einer weiteren Ausführungsform der vorliegenden Erfindung umfasst das erfindungsgemäße Ventil ferner eine Zuführleitung wie beispielsweise ein Rohr oder einen Schlauch, über die der Dosieröffnung das zu dosierende Medium zuführbar ist. Um im Bereich des Ventils die Anzahl an Schnittstellen möglichst gering zu halten, an denen das zu dosierende Medium in unerwünschter Weise austreten kann, ist dabei das unterstromige Ende der Zuführleitung translatorisch bewegbar, wobei der Ventilschieber in Fortsetzung des unterstromigen Endes der Zuführleitung angeordnet ist und eine Strömungsöffnung aufweist, durch die das zu dosierende Medium aus der Zuführleitung der Dosieröffnung des Ventilelements zugeführt werden kann. Da der Ventilschieber in der voran beschriebenen Art und Weise von dem Betätigungsaktor bzw. von dem von dem Betätigungsaktor zu einer Pendelbewegung veranlassten Hebelarm zu einer alternierenden translatorischen Hubbewegung veranlasst wird, führt die Kopplung des Ventilschiebers mit dem unterstromigen Ende der Zuführleitung dazu, dass durch die Hubbewegung des Ventilschiebers auch das unterstromige Ende der Zuführleitung translatorisch hin und her bewegt wird. Es existiert somit lediglich zwischen dem Ventilschieber und dem Ventilelement eine Schnittstelle in Form der Bewegungsfuge, entlang derer der Ventilschieber an dem Ventilelement entlang gleitet, wodurch die Anzahl etwaiger Schnittstellen, durch die in unerwünschter Weise das zu dosierende Medium aus dem Ventil austreten kann, reduziert wird.

Bei dieser Ausführungsform, bei der der Ventilschieber in Fortsetzung des unterstromigen Endes der Zuführleitung angeordnet ist, wird jedes Mal dann, wenn die in dem Ventilschieber ausgebildete Strömungsöffnung infolge der Hubbewegung des Ventilschiebers die in dem Ventilelement ausgebildete Dosieröffnung passiert, eine gewünschte Menge an in der Zuführleitung strömendem Medium an die Dosieröffnung abgegeben, wodurch die gewünschte Dosierung erreicht wird.

Da es insbesondere dann, wenn die Zuführleitung als Rohrleitung ausgebildet ist, infolge der durch die Hubbewegung des Ventilschiebers verursachte Auslenkung des unterstromigen Endes der Zuführleitung zu einer klaffenden Fuge zwischen dem Ventilschieber und dem unterstromigen Ende der Zuführleitung kommen kann, kann das unterstromige Ende der Zuführleitung an dem Ventilschieber elastisch angeschlossen und insbesondere gegenüber diesem über einen elastischen O-Ring abgedichtet sein. Auf diese Weise wird ein Bewegungsausgleich zwischen dem Ventilschieber und dem unterstromigen Ende der Zuführleitung geschaffen, wodurch unerwünschten Leckagen vorgebeugt werden kann.

In entsprechender Weise kann auch das oberstromige Ende der Zuführleitung an einem feststehenden Medienkanal angeschlossen sein, wodurch sich dort ebenfalls etwaige Leckagen vermeiden lassen.

Um die ordnungsgemäße Funktion des Ventils überwachen zu können, kann das Ventil ferner beispielsweise eine Wegmesseinrichtung umfassen, mit der die Hubbewegung des Hebelarms überwacht werden kann, wobei es ausreichend sein kann, die Hubbewegung rein qualitativ, beispielsweise mit einer Lichtschranke, zu überwachen. Um die Hubbewegung quantitativ beurteilen zu können, kann jedoch auch beispielsweise eine induktiv arbeitende Wegmesseinrichtung vorgesehen sein, welche eingerichtet ist, um einen Rückschluss auf die Geschwindigkeit des Hebelarms während seiner Hubbewegung zuzulassen.

Die ordnungsgemäße Funktion des Ventils kann auch überwacht werden, indem das Schwingungsverhalten des zu dosierenden Mediums überwacht wird, da bei jedem Öffnen bzw. Schließen des Ventils auf das Medium ein Druckstoß wirkt, wodurch das Medium zu Schwingungen angeregt wird.

Um auf eine etwaige Fehlfunktion des Ventils (beispielsweise infolge Verschleiß an dem Ventilelement und/oder an dem Ventilschieber) schließen zu können oder um den Füllstand des zu dosierenden Medium zu überwachen, kann ferner ein Körperschallsensor vorgesehen sein, mit dem sich z.B. die Medienfüllung oder der Verschleiß des Ventils überwachen lässt.

Im Folgenden wird die Erfindung anhand eines exemplarischen Ausführungsbeispiels unter Bezugnahme auf die beigefügten Zeichnungen beschrieben, wobei:
- Fig. 1: zeigt eine Schnittdarstellung des erfindungsgemäßen Ventils von der Seite;
- Fig. 2: zeigt eine Schnittdarstellung des erfindungsgemäßen Ventils von vorne;
- Fig. 3: zeigt das Detail Z der Fig. 1 in einer vergrößerten Darstellung;
- Fig. 4: zeigt eine seitliche Schnittdarstellung im Bereich des Koppelelements des Hebelarms;
- Fig. 5: zeigt eine Untersicht des Hebelarms;
- Fig. 6: zeigt eine Querschnittsdarstellung des Hebelarms in einer Untersicht; und
- Fig. 7: zeigt eine dreidimensionale Darstellung des Koppelelements.

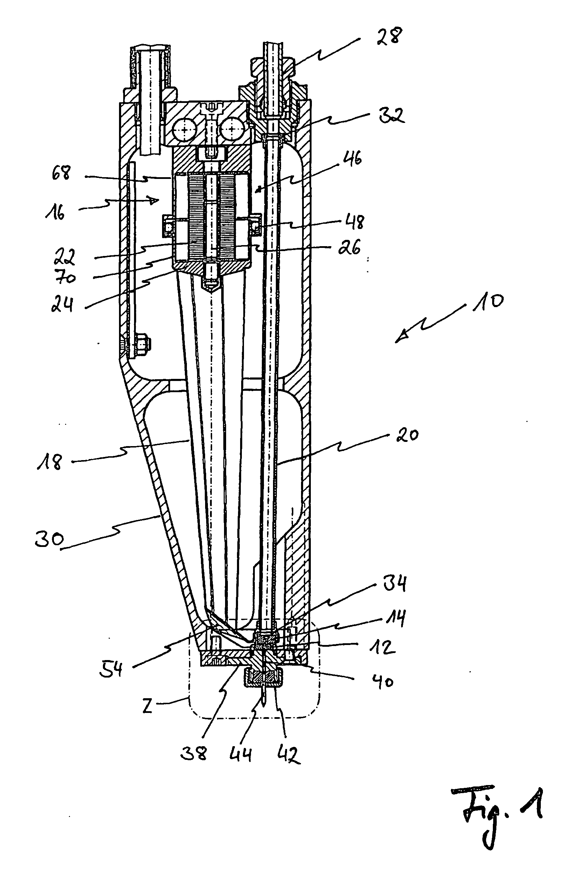

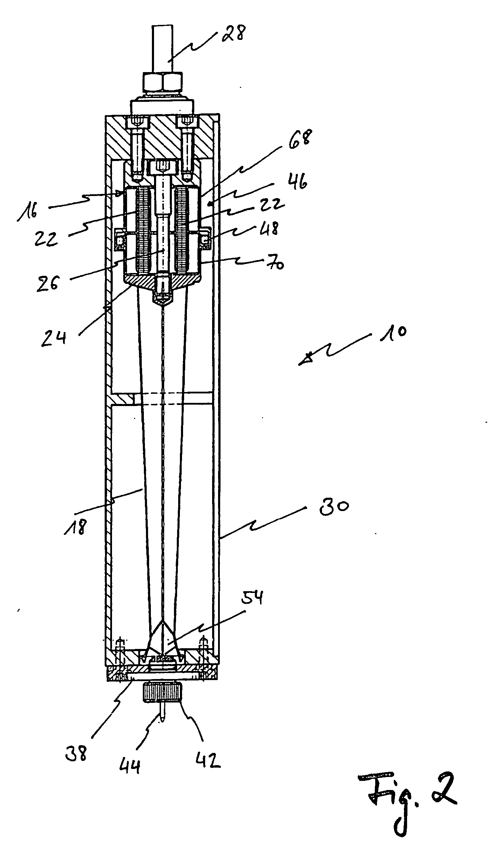

Zunächst wird im Folgenden unter Bezugnahme auf die Fig. 1 bis 3 der grundsätzliche Aufbau des erfindungsgemäßen Ventils beschrieben, welches in den Fig. 1 und 2 als Ganzes mit der Bezugsziffer 10 gekennzeichnet ist und in einem Gehäuse 30 untergebracht ist. In das Gehäuse 30 mündet ein Medienkanal 28 ein, über den dem Ventil 10 das zu dosierende Medium zugeführt wird. Der Medienkanal 28 setzt sich im Inneren des Gehäuses 30 in Form einer Zuführleitung 20 fort, welche an den Medienkanal 28 über einen elastischen O-Ring 32 abgedichtet ist. Bei der Zuführleitung 20 kann es sich dabei entweder um ein Rohr oder um einen Schlauch handeln.

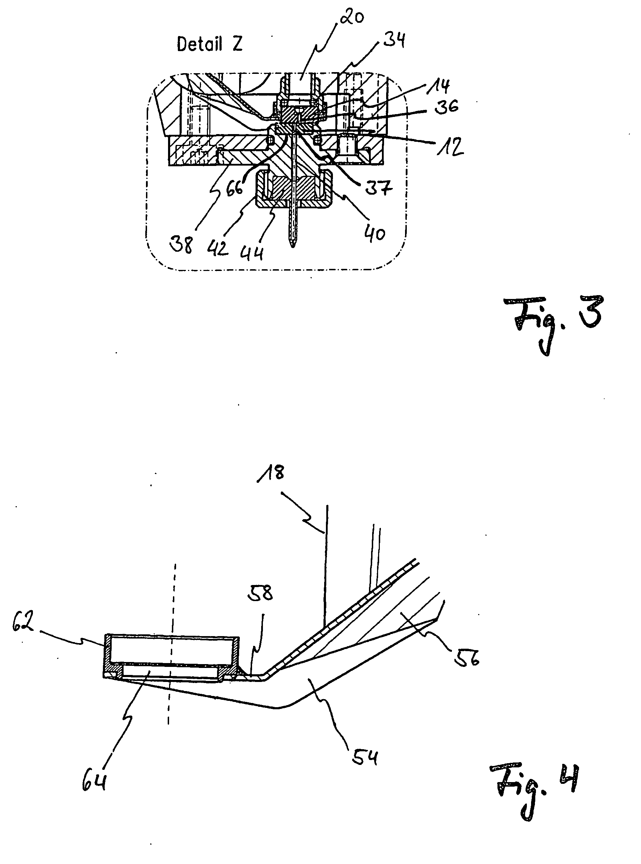

Wie am besten der Fig. 3 entnommen werden kann, ist in Fortsetzung des unterstromigen Endes der Zuführleitung 20 ein Ventilschieber 14 mit der Zuführleitung 20 gekoppelt und gegenüber dieser ebenfalls mit einem O-Ring 34 abgedichtet. Um die Strömung des Mediums durch die Zuführleitung 20 jedoch nicht zu behindern, weist der Ventilschieber 14 eine Strömungsöffnung 36 auf, durch die das Medium an die Dosieröffnung 37 eines Ventilelements 12 abgegeben werden kann, welches in eine Aufnahme 66 einer Justageplatte 38 eingepasst ist, welche ihrerseits an der Unterseite an dem Gehäuse 30 befestigt ist. Die Dosieröffnung 37 des Ventilelements 12 setzt sich dabei in einen Dosierkanal 40 fort, welcher sich durch die Justageplatte 38 hindurch erstreckt, und welcher sich seinerseits wiederum in der Durchgangsöffnung einer Dosiernadel 44 fortsetzt, welche mittels einer Überwurfmutter 42 an einem Befestigungsstutzen der Justageplatte 38 befestigt ist.

Das über den Medienkanal 28 dem Ventil 10 zugeführte Medium strömt somit durch die Zuführleitung 20 zu dem Ventilschieber 14 bzw. durch dessen Strömungsöffnung 36 hindurch, um durch die Dosieröffnung 37 des Ventilelements 12 und den Dosierkanal 40 in der Justageplatte 38 der Dosiernadel 44 zugeführt zu werden, um von dieser dosiert abgegeben werden zu können.

Um zu Zwecken der Dosierung eine kontinuierliche Strömung auf dem soeben beschriebenen Strömungspfad des zu dosierenden Mediums zu verhindern, steht der Ventilschieber 14 in reibschlüssigem Kontakt mit dem Ventilelement 12 und ist insbesondere quer zu der Dosieröffnung 37 translatorisch verschiebbar, so dass nur dann, wenn die Strömungsöffnung 36 mit der Dosieröffnung 37 des Ventilelements 12 fluchtet, das Ventil also geöffnet ist, eine Strömung des Mediums und damit die Abgabe des zu dosierenden Mediums von der Dosiernadel 44 möglich ist. Wenn allerdings der Ventilschieber 14 zur Seite bewegt wird, wie dies in den Fig. 1 und 3 dargestellt ist, und die Strömungsöffnung 36 nicht mit der Dosieröffnung 37 des Ventilelements 12 fluchtet, das Ventil also geschlossen ist, wird eine Strömung des zu dosierenden Mediums unterbunden.

Um das zu dosierende Medium im Klein- und Kleinstmengenbereich über die Dosiernadel 44 abgeben zu können, ist es dementsprechend erforderlich, den Ventilschieber 14 zu einer hochfrequenten translatorischen Hubbewegung quer zu der Dosieröffnung 37 zu veranlassen, so dass die Dosieröffnung 37 lediglich kurzzeitig stets dann geöffnet ist, wenn die Strömungsöffnung 36 des Ventilschiebers 14 mit der Dosieröffnung 37 fluchtet.

Um den Ventilschieber 14 zu dieser hochfrequenten, translatorischen Hubbewegung zu veranlassen, umfasst das Ventil 10 ferner einen Betätigungsaktor 16, welcher in der hier dargestellten Ausführungsform zwei piezoaktuatorische Kippelemente 22 aufweist, wie sie im Detail in der DE 196 46 511 C1 oder in der DE 198 55 221 A1 beschrieben sind, worauf hiermit explizit Bezug genommen wird. Die piezoaktuatorischen Kippelemente 22 sind dabei in ein Schutzgehäuse 46 des Betätigungsaktors 16 eingepasst, welches an der Oberseite des Gehäuses 30 des Ventils 10 befestigt ist. Das Schutzgehäuse 46 besteht aus einer oberen Gehäusehälfte 68 und einer unteren Gehäusehälfte 70, welche gegeneinander mittels einer elastischen O-Ringdichtung 48 abgedichtet sind, so dass der Betätigungsaktuator 16 hermetisch abgedichtet ist, um ein unerwünschtes Eindringen eines Mediums zu verhindern. Den Abschluss der unteren Gehäusehälfte 70 bildet dabei ein als Kippsockel 24 bezeichnetes Joch, welches über eine Spannschraube 26 mit der oberen Gehäusehälfte 68 verspannt ist. Durch eine alternierende Spannungsversorgung der beiden Kippelemente 22 dehnen sich diese einseitig abwechselnd aus bzw. ziehen sich zusammen, was dazu führt, dass der Kippsockel 24 zu einer Kippbewegung um eine Achse veranlasst wird, welche senkrecht zur Zeichenebene der Darstellung der Fig. 1 steht.

Um diese Kippbewegung des Kippsockels 24 auf den Ventilschieber 14 übertragen und insbesondere verstärkt übersetzen zu können, ist an dem Kippsockel 24 ein Hebelarm 18 angeschweißt, welcher an seinem freien Ende mit dem Ventilschieber 14 gekoppelt ist. Die Kippschwingung des Kippsockels 24 wird somit über den Hebelarm 18 in eine translatorische Hubbewegung des Ventilschiebers 14 übersetzt, um die Dosieröffnung 37 in der gewünschten Art und Weise alternierend öffnen und schließen zu können.

Zwar lassen sich die piezoaktuatorischen Kippelemente 22 ohne weiteres zu einer Schwingung mit einer Frequenz von 500 Hz bis 1 kHz anregen. Um diese Frequenz jedoch auf den Ventilschieber 14 präzise übertragen zu können, weist der Hebelarm 18 einen speziellen Querschnitt auf, worauf im Folgenden eingegangen wird.

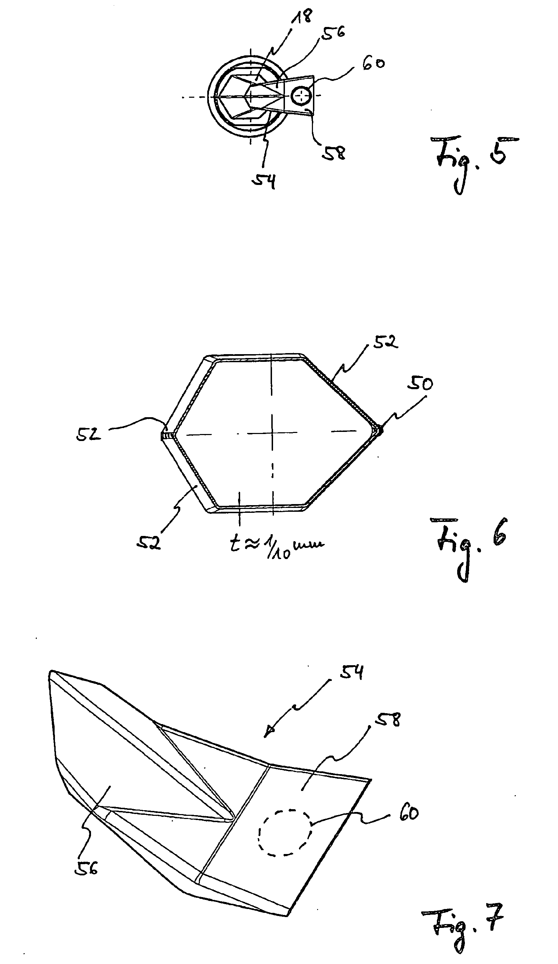

Wie bereits den Darstellungen der Fig. 1 und 2 ohne weiteres entnommen werden kann, weist der Hebelarm 18 eine sich in Richtung des Ventilschiebers 14 verjüngende Gestalt auf, was sich im Hinblick auf die bei der Beschleunigung des Hebelarms auftretenden Massenträgheitskräfte als vorteilhaft erweist. Wie ferner die Fig. 6 zeigt, weist der Hebelarm 18 einen in sich geschlossenen, in der dargestellten Ausführungsform wabenförmigen Hohlquerschnitt auf, was sich zum einen ebenfalls in Bezug auf die Reduzierung der Massenträgheitskräfte als vorteilhaft erweist. Zum anderen weist jedoch ein derartiger Hohlquerschnitt gegenüber einem entsprechenden Vollquerschnitt ein annähernd gleichwertiges Flächenträgheitsmoment auf, so dass sich diese Reduzierung des Gewichts des Hebelarms 18 nur unwesentlich in einer Reduzierung der Steifigkeit des Hebelarms 18 auswirkt.

Bei entsprechender Materialwahl (beispielsweise Edelstahl) kann die Wandungsdicke des Hebelarms 18 bis auf etwa 0,1 mm reduziert werden, ohne dass dies in unangemessener Weise zu Lasten der Steifigkeit geht. Um die Herstellung eines derartigen Hebelarms 18 mit sich in Längsrichtung verjüngendem geschlossenem Hohlquerschnitt zu vereinfachen, kann der Hebelarm 18 aus mehreren gekanteten Blechformteilen 52 gefügt, insbesondere zusammengeschweißt werden, wie dies der Darstellung der Fig. 6 entnommen werden kann. Zur Herstellung des dargestellten Hebelarms 18 werden zunächst aus einem Edelstahlblech zwei symmetrische Blechformteilhälften 52 gekantet, welche anschließend entlang ihrer freien Ränder mit entsprechenden Schweißnähten 50 miteinander verbunden werden.

Wie bereits zuvor beschrieben wurde, lässt sich mit Hilfe des Hebelarms 18 die Kippbewegung des Kippsockels 24 in eine im Wesentlichen translatorische Hubbewegung des freien Endes des Hebelarms 18 bzw. des damit gekoppelten Ventilschiebers 14 transformieren. Da allerdings das freie Ende des Hebelarms 18 bei seiner Pendelbewegung auch eine - wenn auch sehr kleine - Bewegungskomponente senkrecht zu der gewünschten translatorischen Hubbewegung des Ventilschiebers 14 aufweist, ist es wünschenswert, den Ventilschieber 14 dahingehend von dem Hebelarm 18 zu entkoppeln, dass diese senkrechte Bewegungskomponente nicht auf den Ventilschieber 14 übertragen wird.

Hierzu ist an das freie Ende des Hebelarms 18 ein Koppelelement 54 angeschweißt, welches aus einem Edelstahlblech gekantet ist, wie es im Detail der Fig. 7 entnommen werden kann. Wie dieser Darstellung entnommen werden kann, weist das Koppelelement 54 einen Faltwerkabschnitt 56 sowie einen daran anschließenden ebenen Trägerabschnitt 58 auf. Hierbei verleiht der Faltwerkabschnitt 56 dem Koppelelement 54 in Längsrichtung die erforderliche Steifigkeit, um die senkrecht zur Längserstreckung des Hebelarms 18 ausgerichtete Bewegungskomponente auf den Ventilschieber 14 übertragen zu können. Der Faltwerkabschnitt ist dabei unter einem Winkel von etwa 45° am freien Ende des Hebelarms 18 angeschweißt und ragt seitlich geringfügig über den Hebelarm 18 hinaus. Demgegenüber ist der ebene Trägerabschnitt 58, welcher im wesentlichen senkrecht zur Längsachse des Hebelarms 18 ausgerichtet ist, verhältnismäßig weich und somit in der Lage, die parallel zur Längserstreckung des Hebelarms 18 ausgerichtete Bewegungskomponente bei einer Auslenkung des Hebelarms 18 zu kompensieren, so dass diese nicht auf den Ventilschieber 14 übertragen wird.

Der Trägerabschnitt 58 weist eine Bohrung 60 auf (siehe Fig. 5 und 7), in die ein Aufnahmeelement 62 eingepasst ist (Fig. 4), welches an dem Trägerabschnitt 58 mittels einer Schweißnaht befestigt ist. Das Aufnahmeelement 62 weist eine Aufnahmeöffnung 66 auf, welche auf die Gestalt des Ventilschiebers 14 abgestimmt ist, sodass sich dieser durch die Aufnahmeöffnung 66 hindurch erstrecken und somit mit seiner Unterseite mit dem Ventilelement 12 in Anlage gelangen kann.

Die mit Hilfe der piezoaktuatorischen Kippelemente 22 herbeigeführte Kippbewegung des Kippsockels 24 lässt sich somit infolge der filigranen, aber dennoch steifen Gestalt des Hebelarms 18 präzise auf den Ventilschieber 14 in Form einer translatorischen Hubbewegung übertragen, welcher dabei infolge des direkten Kontakts mit dem Ventilelement 12 auf diesem hin und her gleitet, wozu sowohl der Ventilschieber 14 als auch das Ventilelement 12 aus einem Keramikmaterial gefertigt sind, um die Abrieb- und Verschleißfestigkeit zu erhöhen. Das dem Ventilschieber über die Zuführleitung 20 zugeführte Medium strömt dabei jedes Mal dann in die Dosieröffnung 37 des Ventilelements 12 und von dort zu der Dosiernadel 44, wenn die Strömungsöffnung 36 des Ventilschiebers 14 mit der Dosieröffnung 37 des Ventilelements 12 fluchtet. Um eine Dosierung im Klein- und Kleinstmengenbereich zu erzielen ist es dabei wünschenswert, den Ventilschieber 14 zu einer hochfrequenten translatorischen Hubbewegung zu veranlassen. Erfindungsgemäß wird dies durch die bereits zuvor beschriebene spezielle Gestalt des Hebelarms 18 sichergestellt, mit der sich hochfrequente Kippschwingungen des Kippsockels 24 mit einer Frequenz von 500 Hz und mehr präzise auf den Ventilschieber 14 in Form einer translatorischen Hubbewegung übersetzen lassen.

Der Vollständigkeit halber sei an dieser Stelle erwähnt, dass der Betätigungsmechanismus in Form des piezoaktuatorisch angetriebenen Hebelarms 18 mit dem davon zu einer Hubbewegung veranlassten Ventilschieber 14 auch als reiner Strahlunterbrecher eines gespritzten Mediums zum Einsatz kommen kann. In diesem Falle wird das Ventilelement 12 nicht benötigt. Vielmehr, wird in diesem Anwendungsfall ein Spritzstrahl eines Mediums durch den Ventilschieber 14 periodisch unterbrochen, indem in diesen mit Hilfe des piezoaktuatorisch angetriebenen Hebelarms 18 der Ventilschieber 14 in regelmäßigen Abständen zu Zwecken der Dosierung eingeschoben wird.

### Bezugszeichenliste

- 10: Ventil
- 12: Ventilelement
- 14: Ventilschieber
- 16: Betätigungsaktor
- 18: Hebelarm
- 20: Zuführleitung
- 22: piezoaktuatorisches Kippelement
- 24: Kippsockel/Joch
- 26: Spannschraube
- 28: Medienkanal
- 30: Gehäuse
- 32: O-Ring
- 34: O-Ring
- 36: Strömungsöffnung in 14
- 37: Dosieröffnung in 12
- 38: Justageplatte
- 40: Dosierkanal in 38
- 42: Überwurfmutter
- 44: Dosiernadel
- 46: Schutzgehäuse
- 48: O-Ring
- 50: Schweißnaht
- 52: Blechformteil
- 54: Koppelelement
- 56: Faltwerkabschnitt
- 58: Trägerabschnitt
- 60: Bohrung
- 62: Aufnahmeelement
- 64: Aufnahmeöffnung
- 66: Aufnahme in 38
- 68: obere Gehäusehälfte von 46
- 70: untere Gehäusehälfte von 46

## Patentansprüche

1. Ventil (10), insbesondere zur Dosierung von pastösen Medien, umfassend:
- ein Ventilelement (12) mit einer Dosieröffnung (37),
- einen translatorisch bewegbaren Ventilschieber (14) zum Öffnen und Schließen der Dosieröffnung (37),
- einen Betätigungsaktor (16), welcher zur Ausführung einer Kippbewegung eingerichtet ist, und
- einen mit dem Betätigungsaktor (16) gekoppelten Hebelarm (18), der die Kippbewegung des Betätigungsaktors (16) zum Öffnen und Schließen der Dosieröffnung (37) in eine translatorische Hubbewegung des Ventilschiebers (14) umsetzt,
**dadurch gekennzeichnet, dass**
der Hebelarm (18) einen in sich geschlossenen Hohlquerschnitt aufweist.

2. Ventil nach Anspruch 1,
**dadurch gekennzeichnet, dass**
der Hebelarm (18) einen sich in Richtung des Ventilschiebers (14) verjüngen Querschnitt aufweist.

3. Ventil nach Anspruch 1 oder 2,
**dadurch gekennzeichnet, dass**
der Hebelarm (18) aus einem Edelstahlblech gefertigt ist.

4. Ventil nach zumindest einem der vorstehenden Ansprüche,
**dadurch gekennzeichnet, dass**
der Hebelarm (18) aus mehreren gekanteten Blechformteilen (52) gefügt, insbesondere zusammengeschweißt ist.

5. Ventil nach zumindest einem der vorstehenden Ansprüche,
**dadurch gekennzeichnet, dass**
der Betätigungsaktoi- (16) einen Kippsockel (24) umfasst, an dem der Hebelarm (18) als Kragarm biegesteif angeschlossen, insbesondere angeschweißt ist, welcher an seinem frei auskragenden Ende mit dem Ventilschieber (14) gekoppelt ist.

6. Ventil nach zumindest einem der vorstehenden Ansprüche,
**dadurch gekennzeichnet, dass**
der Hebelarm (18) an seinem frei auskragenden Ende ein Koppelelement (54) zur Aufnahme des Ventilschiebers (14) aufweist.

7. Ventil nach zumindest einem der vorstehenden Ansprüche,
**dadurch gekennzeichnet, dass**
das Ventilelement (12) und/oder der Ventilschieber (14) aus einem Keramikmaterial gefertigt sind.

8. Ventil nach zumindest einem der vorstehenden Ansprüche,
**dadurch gekennzeichnet, dass**
ferner eine Zuführleitung (20) vorgesehen ist, über die der Dosieröffnung (37) das zu dosierende Medium zuführbar ist.

9. Ventil nach Anspruch 8,
**dadurch gekennzeichnet, dass**
das unterstromige Ende der Zuführleitung (20) translatorisch bewegbar ist.

10. Ventil nach Anspruch 8 oder 9,
**dadurch gekennzeichnet, dass**
der Ventilschieber (14) in Fortsetzung des unterstromigen Endes der Zuführleitung (20) angeordnet ist und eine Strömungsöffnung (36) aufweist, durch die das zu dosierende Medium aus der Zuführleitung (20) der Dosieröffnung (37) zuführbar ist.

11. Ventil nach zumindest einem der Ansprüche 8 bis 10,
**dadurch gekennzeichnet, dass**
das unterstromige Ende der Zuführleitung (20) an dem Ventilschieber (14) elastisch angeschlossen, insbesondere gegenüber diesem über einen elastischen O-Ring (34) abgedichtet ist, und/oder dass das oberstromige Ende der Zuführleitung (20) an einem feststehenden Medienkanal (20) elastisch angeschlossen, insbesondere gegenüber diesem über einen elastischen O-Ring (32) abgedichtet ist.

12. Ventil nach zumindest einem der vorstehenden Ansprüche,
**dadurch gekennzeichnet, dass**
der Betätigungsaktor (16) zumindest ein piezoaktuatorisches Kippelement (22) aufweist.

13. Ventil nach zumindest einem der vorstehenden Ansprüche,
**dadurch gekennzeichnet, dass**
eine Wegmesseinrichtung vorgesehenen ist, die die Hubbewegung des Hebelarms (18) überwacht.

14. Ventil nach zumindest einem der vorstehenden Ansprüche,
**dadurch gekennzeichnet, dass**
ein Körperschallsensor vorgesehen ist, der das Schwingungsverhalten des Ventils (10) überwacht.

## Claims

1. A valve (10), in particular for the metering of pasty media, comprising:
- a valve element (12) having a metering opening (37);
- a valve gate (14) movable in translation for the opening and closing of the metering opening (37);
- an actuator (16) which is configured for the execution of a tilting movement; and
- a lever arm (18) which is coupled to the actuator (16) and which converts the tilting movement of the actuator (16) for the opening and closing of the metering opening (37) into a translational stroke movement of the valve gate (14),
**characterized in that**
the lever arm (18) has a hollow cross-section closed in itself.

2. A valve in accordance with claim 1,
**characterized in that**
the lever arm (18) has a cross-section converging in the direction of the valve gate (14).

3. A valve in accordance with claim 1 or claim 2,
**characterized in that**
the lever arm (18) is made of a sheet of stainless steel.

4. A valve in accordance with at least one of the preceding claims,
**characterized in that**
the lever arm (18) is joined, in particular welded together, from a plurality of folded shaped sheet parts (52).

5. A valve in accordance with at least one of the preceding claims,
**characterized in that**
the actuator (16) includes a tilting base (24) to which the lever arm (18) is rigidly connected, in particular welded, as a cantilever which is coupled at its freely projecting end to the valve gate (14).

6. A valve in accordance with at least one of the preceding claims,
**characterized in that**
the lever arm (18) has a coupling element (54) at its freely projecting end for the reception of the valve gate (14).

7. A valve in accordance with at least one of the preceding claims,
**characterized in that**
the valve element (12) and/or the valve gate (14) is/are made of a ceramic material.

8. A valve in accordance with at least one of the preceding claims,
**characterized in that**
a supply line (20) is furthermore provided via which the medium to be metered can be supplied to the metering opening (37).

9. A valve in accordance with claim 8,
**characterized in that**
the downstream end of the supply line (20) is movable in translation.

10. A valve in accordance with claim 8 or claim 9,
**characterized in that**
the valve gate (14) is arranged in continuation of the downstream end of the supply line (20) and has a flow opening (36) through which the medium to be metered can be supplied from the supply line (20) to the metering opening (37).

11. A valve in accordance with at least one of the claims 8 to 10,
**characterized in that**
the downstream end of the supply line (20) is elastically connected to the valve gate (14) and is in particular sealed with respect to it via an elastic O ring (34); and/or **in that** the upstream end of the supply line (20) is elastically connected to a fixed media passage (20) and is in particular sealed with respect to it via an elastic O ring (32).

12. A valve in accordance with at least one of the preceding claims,
**characterized in that**
the actuator (16) has at least one tilting element (22) in the form of a piezoactuator.

13. A valve in accordance with at least one of the preceding claims,
**characterized in that**
a path measurement device is provided which monitors the stroke movement of the lever arm (18).

14. A valve in accordance with at least one of the preceding claims,
**characterized in that**
a sensor for structure-borne sound is provided which monitors the oscillatory behavior of the valve (10).

## Revendications

1. Vanne (10), en particulier de pour le dosage de milieux pâteux, comprenant :
- un élément de vanne (12) avec une ouverture de dosage (37),
- un tiroir de vanne (14) déplaçable en translation pour ouvrir et fermer l'ouverture de dosage (37),
- un élément d'actionnement (16), qui est conçu pour exécuter un mouvement de basculement, et
- un bras de levier (18), couplé à l'élément d'actionnement (16), qui convertit le mouvement de basculement de l'élément d'actionnement (16) pour ouvrir et fermer l'ouverture de dosage (37) en un mouvement de levée en translation du tiroir de vanne (14),
**caractérisée en ce que** le bras de levier (18) présente une section transversale creuse fermée sur elle-même.

2. Vanne selon la revendication 1,
**caractérisée en ce que** le bras de levier (18) présente une section transversale qui va en se rétrécissant en direction du tiroir de vanne (14).

3. Vanne selon la revendication 1 ou 2,
**caractérisée en ce que** le bras de levier (18) est fabriqué à partir d'une tôle d'acier inoxydable.

4. Vanne selon l'une au moins des revendications précédentes,
**caractérisée en ce que** le bras de levier (18) est assemblé, en particulier soudé, à partir de plusieurs pièces conformées en tôle pliée (52).

5. Vanne selon l'une au moins des revendications précédentes,
**caractérisée en ce que** l'élément d'actionnement (16) comprend un socle basculant (24) sur lequel est raccordé, en particulier soudé, le bras de levier (18) sous forme de bras en porte-à-faux rigide en flexion, lequel est accouplé à son extrémité en porte-à-faux libre au tiroir de vanne (14).

6. Vanne selon l'une au moins des revendications précédentes,
**caractérisée en ce que**, à son extrémité en porte-à-faux libre, le bras de levier (18) comprend un élément d'accouplement (34) pour recevoir le tiroir de vanne (14).

7. Vanne selon l'une au moins des revendications précédentes,
**caractérisée en ce que** l'élément de vanne (12) et/ou le tiroir de vanne (14) sont fabriqués en une matière céramique.

8. Vanne selon l'une au moins des revendications précédentes,
**caractérisée en ce qu'**il est en outre prévu une conduite d'admission (20) via laquelle le milieu à doser peut être admis à l'ouverture de dosage (37).

9. Vanne selon la revendication 8,
**caractérisée en ce que** l'extrémité aval de la conduite d'admission (20) est déplaçable en translation.

10. Vanne selon la revendication 8 ou 9,
**caractérisée en ce que** le tiroir de vanne (14) est agencé dans le prolongement de l'extrémité aval de la conduite d'admission (20) et présente une ouverture d'écoulement (36) via laquelle le milieu à doser provenant de la conduite d'admission (20) peut être admis à l'ouverture de dosage (37).

11. Vanne selon l'une au moins des revendications 8 à 10,
**caractérisée en ce que** l'extrémité aval de la conduite d'amenée (20) est raccordée de manière élastique au tiroir de vanne (14), en particulier en étant étanchée vis-à-vis de celui-ci via un joint torique élastique (34), et/ou **en ce que** l'extrémité amont de la conduite d'amenée (20) est raccordée de manière élastique à un canal à fluide stationnaire (20), en particulier en étant étanchée vis-à-vis de celui-ci via un joint torique élastique (32).

12. Vanne selon l'une au moins des revendications précédentes,
**caractérisée en ce que** l'élément d'actionnement (16) comprend un élément basculant (22) à fonctionnement piézoélectrique.

13. Vanne selon l'une au moins des revendications précédentes,
**caractérisée en ce qu'**il est prévu un dispositif de mesure de course, qui surveille le mouvement de levée du bras de levier (18).

14. Vanne selon l'une au moins des revendications précédentes,
**caractérisée en ce qu'**il est prévu un capteur de sons structurels, qui surveille le comportement oscillatoire de la vanne (10).
